# EUROPÄISCHE PATENTSCHRIFT

(11) **EP 2 629 938 B1**
(45) Veröffentlichungstag und Bekanntmachung des Hinweises auf die Patenterteilung: **04.05.2016**
(21) Anmeldenummer: 11768046.2
(22) Anmeldetag: 14.10.2011
(51) Int. Cl.: B25J 19/06, F16D 3/60, F16F 15/121, F16H 33/02

(54) **NACHGIEBIGE KUPPLUNG**
YIELDING COUPLING
ACCOUPLEMENT FLEXIBLE

(30) Priorität: 18.10.2010 DE 102010048567
(43) Veröffentlichungstag der Anmeldung: 28.08.2013
(73) Patentinhaber: Deutsches Zentrum Für Luft- Und Raumfahrt E.V. (DLR), 51147 Köln (DE)
(72) Erfinder: WEDLER, Armin, 80636 München (DE)
(74) Vertreter: von Kreisler Selting Werner - Partnerschaft von Patentanwälten und Rechtsanwälten mbB
(86) Internationale Anmeldenummer: PCT/EP2011/067991
(87) Internationale Veröffentlichungsnummer: WO 2012/052362

(56) Entgegenhaltungen:
- EP-A1- 0 016 331
- JP-A- 2000 283 173

## Beschreibung

Die vorliegende Erfindung betrifft eine nachgiebige Getriebeeinheit.

In der Robotik wird häufig versucht, sich von biologischen Verhalten inspirieren zu lassen oder biologisches Verhalten abzubilden. Dabei hat sich herausgestellt, dass die Implementierung von passiven nachgiebigen Elementen bei der Nachbildung von biologischen Verhalten unabdingbar ist. Darüber hinaus ermöglichen nachgiebige Elemente in einem Antriebssystem, dass dieses vor zu großen Impulsen von der Umwelt geschützt wird und gleichzeitig die Umwelt von zu großen Impulsen des Antriebsystems ebenfalls geschützt wird.

Ferner zeigen biologische Verhalten, wie beispielsweise Gelenke des tierischen oder menschlichen Körpers, häufig die Eigenschaft, dass in bestimmten Bewegungsphasen Energie in dem Gelenk als potentielle Energie gespeichert werden kann und in anderen Phasen der Bewegung als kinetische Energie zurückgespeist wird.

JP 2000283173 A offenbart eine Getriebeeinheit mit den Merkmalen des Oberbegriffs des Anspruchs 1.

Es ist daher die Aufgabe der vorliegenden Erfindung, eine Getriebeeinheit bereitzustellen, die nachgiebige Elemente aufweist und gleichzeitig die Möglichkeit der Energiespeicherung und -einspeisung besitzt. Zur Lösung der Aufgabe dienen die Merkmale des Anspruchs 1.

Erfindungsgemäß ist bei einer Getriebeeinheit mit einer Antriebswelle und einem Abtrieb, wobei der Abtrieb koaxial zu der Antriebswelle angeordnet ist, vorgesehen, dass ein Seiltriebsystem die Antriebswelle mit dem Abtrieb verbindet. Dabei besteht das Seiltriebsystem aus mindestens einer ersten Seilzugeinrichtung und mindestens einer zweiten Seilzugeinrichtung.

Die Seilzugeinrichtungen bestehen jeweils aus einem Zugseil und einem Seilaufwickler. Die Seilaufwickler der ersten und der zweiten Seilzugeinrichtung sind jeweils an dem Abtrieb angeordnet. Jedes Zugseil weist ein erstes Ende und ein zweites Ende auf, wobei die Zugseile mit ihrem ersten Ende jeweils an der Antriebswelle und mit dem zweiten Ende an einem der Seilaufwickler befestigt sind. Jeder Seilaufwickler weist eine Federeinrichtung auf, die den Seilwickler in Aufwickelrichtung vorspannt. Die Seilaufwickler der ersten Seilzugeinrichtung sind gegenläufig zu den Seilaufwicklern der zweiten Seilzugeinrichtung angeordnet. Mit anderen Worten: Die Antriebswelle ist mit dem Abtrieb über zwei gegenläufige Seilzugeinrichtungen verbunden.

Die erfindungsgemäße Getriebeeinheit hat den Vorteil, dass ein über die Antriebswelle in die Getriebeeinheit eingeleitetes Drehmoment über die Zugseile auf die Seilaufwickler und somit auf die Federeinrichtungen übertragen wird. Die Federeinrichtungen sind somit zwischen Antriebswelle und Abtrieb zwischengeschaltet und können zu starke Überlastungen aufnehmen, so dass die Umwelt vor zu großen Impulsen durch die Abtriebswelle und das System durch zu große Impulse von der Umwelt geschützt wird. Durch das Vorsehen von zwei gegenläufigen Seilzugeinrichtungen kann von dem Antrieb in unterschiedliche Richtungen ein Drehmoment auf den Abtrieb übertragen werden. Gleichzeitig ist es möglich, die beiden Seilzugeinrichtungen gegeneinander zu verspannen, so dass ein antagonistisches System durch die Getriebeeinheit verwirklicht wird. Dabei kann in einem Überlastungsfall in eine Federeinrichtung eingespeiste kinetische Energie, die in dem Federsystem als potentielle Energie gespeichert wird, bei einem Wechsel der Bewegungsrichtung dem System als kinetische Energie zurückgegeben werden, indem der Abtrieb von der entsprechenden Seilzugeinrichtung durch Entlastung der Federeinrichtung in die neue Bewegungsrichtung gezogen wird.

Erfindungsgemäß kann vorgesehen sein, dass die Federeinrichtung eines oder jedes Seilaufwicklers eine nichtlineare Federkennlinie besitzt.

Alternativ kann vorgesehen sein, dass die Federeinrichtung eines oder jedes Seilaufwicklers eine lineare Federkennlinie besitzt und der Seilaufwickler eine Aufwickelspule mit nichtlinearer Wegübersetzung, vorzugsweise eine Schneckenspule, besitzt.

Es hat sich herausgestellt, dass eine nichtlineare Federkennlinie des Seilaufwicklers in dem vorliegenden System besonders vorteilhaft ist. Dabei kann die Nichtlinearität entweder durch das Vorsehen einer Federeinrichtung mit nichtlinearer Federkennlinie oder durch das Vorsehen einer Aufwickelspule, die eine Nichtlinearität des Systems hervorruft, verwirklicht werden.

In einem Ausführungsbeispiel der Erfindung ist vorgesehen, dass mehrere erste und zweite Seiltriebsysteme die Antriebswelle und den Abtrieb verbinden. Durch das Vorsehen von mehreren ersten und zweiten Seiltriebsystemen wird die Drehmomentübertragung von der Antriebswelle auf den Abtrieb wesentlich verbessert. Dabei kann vorgesehen sein, dass die Anzahl der ersten und zweiten Seiltriebsysteme gleich ist. Auf diese Weise kann gewährleistet werden, dass in unterschiedliche Drehrichtungen des Antriebs das Drehmoment auf gleicher Weise auf den Abtrieb übertragen wird.

In einem Ausführungsbeispiel der Erfindung ist vorgesehen, dass die Seilaufwickler drehverstellbar an dem Abtrieb gelagert sind, wobei jeder Seilaufwickler in einer Drehstellung arretierbar ist. Auf diese Weise kann die Federvorspannung der einzelnen Seilaufwickler verändert werden, so dass die Steifigkeit der erfindungsgemäßen Getriebeeinheit variabel ist.

In einem Ausführungsbeispiel der Erfindung kann vorgesehen sein, dass der Abtrieb als Hohlwelle ausgebildet ist, die die Antriebswelle aufnimmt. Durch das Vorsehen eines Abtriebs als Hohlwelle ergibt sich eine günstige Materialverteilung. Darüber hinaus sind in der Robotik Hohlwellen wichtig, um Kabel oder Leitungen durch ein Getriebe zu leiten. Es kann beispielsweise auch vorgesehen sein, dass die Antriebswelle als Hohlwelle ausgebildet ist.

In einem besonders bevorzugten Ausführungsbeispiel ist vorgesehen, dass der Abtrieb eine erste und eine zweite Drehplatte aufweist, wobei die zweite Drehplatte parallel zu der ersten Drehplatte angeordnet ist. Die Drehplatten sind drehbar an dem Abtrieb gelagert und in einer Drehstellung arretierbar. Die Seilaufwickler der ersten Seilzugeinrichtung sind dabei auf der ersten Drehplatte angeordnet, wohingegen die Seilaufwickler der zweiten Seilzugeinrichtung auf der zweiten Drehplatte angeordnet sind. Mit anderen Worten: Die erste und die zweite Drehplatte bilden eine untere und obere Ebene, wobei die ersten Seilzugeinrichtungen an der ersten Drehplatte angreifen und die zweiten Seilzugeinrichtungen an der zweiten Drehplatte angreifen. Durch die Drehverstellbarkeit und Arretierbarkeit der Drehplatten ermöglicht die erfindungsgemäße Getriebeeinheit, dass die Steifigkeit der Getriebeeinheit variabel verstellbar ist, da durch eine Drehung einer der beiden Platten die Vorspannung der auf der Drehplatte angeordneten Sellaufwickler verändert wird. Auf diese Weise ist ein sehr kompaktes und auf eine einfache Art und Weise Steifigkeit verstellbares System realisierbar.

Im Folgenden wird unter Bezugnahme auf die nachfolgenden Zeichnungen die Erfindung näher erläutert. Es zeigen:
- Fig. 1: eine schematische Draufsicht des ersten Ausführungsbeispiels einer erfindungsgemäßen Getriebeeinheit und
- Fig. 2: eine schematische Seitenansicht eines zweiten Ausführungsbeispiels einer erfindungsgemäßen Getriebeeinheit.

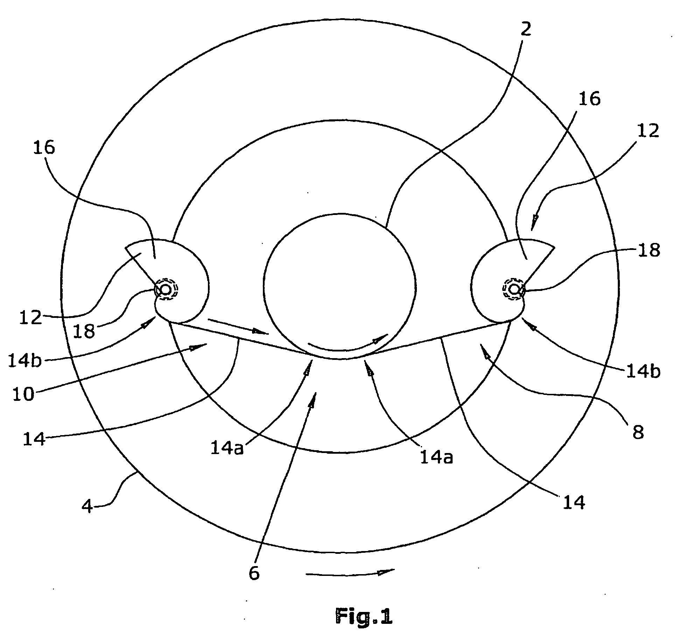

Fig. 1 zeigt eine erfindungsgemäße Getriebeeinheit 1 schematisch in der Draufsicht.

Die Getriebeeinheit 1 weist eine Antriebswelle 2 auf und einen koaxial zu der Antriebswelle angeordneten Abtrieb 4. In dem in Fig. 1 dargestellten Ausführungsbeispiel ist der Abtrieb 4 als Hohlwelle ausgebildet.

Die Antriebswelle 2 und der Abtrieb 4 sind über ein Seiltriebsystem 6 miteinander verbunden. Das Seiltriebsystem 6 besteht aus einer ersten Seilzugeinrichtung 8 und einer zweiten Seilzugeinrichtung 10. Die erste und die zweite Seilzugeinrichtung 8,10 weisen jeweils einen Seilaufwickler 12 sowie ein Zugseil 14 auf. Die Seilaufwickler 12 sind an dem Abtrieb 4 angeordnet. Jedes Zugseil 14 ist mit einem ersten Ende 14a an der Antriebswelle befestigt. Mit einem zweiten Ende 14b sind die Zugseile 14 an dem Seilaufwickler 12 befestigt und teilweise auf den Seilaufwickler 12 aufgewickelt.

Jeder Seilaufwickler 12 besteht aus einer Aufwickelspule 16, die drehbar an dem Seilaufwickler 12 gelagert ist. An den Seilaufwicklern 12 ist jeweils eine Federeinrichtung 18 angeordnet, die mit der Aufwickelspule 16 zusammenwirkt, so dass diese entgegen der Federkraft der Federeinrichtung 18 drehbar sind. Die Federeinrichtungen 18 spannen die Aufwickelspulen 16 der Seilaufwickler 12 jeweils in ihre Aufwickelrichtung vor.

Die Seilaufwickler 12 der ersten Seilzugeinrichtung 8 und der zweiten Seilzugeinrichtung 10 sind gegenläufig zueinander angeordnet. Ein im Betrieb auf die Antriebswelle 2 ausgeübtes Drehmoment wird über eines der Zugseile 14 auf den Seilaufwickler 12 und von dem Seitaufwickler 12 über die Federeinrichtung 18 an den Abtrieb 4 zum Erzeugen der Abtriebsbewegung übertragen. Dabei kann die Federeinrichtung einen Teil des Drehmomentes, wie beispielsweise überhöhte Drehmomente, aufnehmen. In dem in Fig. 1 dargestellten Ausführungsbeispiel ist eine Drehbewegung des Antriebs der Antriebswelle 2 entgegen dem Uhrzeigersinn gezeigt, so dass die Drehbewegung über die zweite Seilzugeinrichtung 10 an den Abtrieb 4 übertragen wird.

Durch die gegenläufige Anordnung der ersten und der zweiten Seilzugeinrichtung 8,10 können Drehmomente in beide Richtungen von der Antriebswelle 2 auf den Abtrieb 4 übertragen werden.

Wenn bei der Übertragung eines Drehmomentes von der Antriebswelle 2 auf den Abtrieb 4 ein Teil des Drehmomentes in einer Federeinrichtung 18 eines der Seilaufwickler 12 aufgenommen wird, wird diese kinetische Energie als potentielle Energie in der Federeinrichtung 18 gespeichert.

Bei einer entgegengesetzten Bewegung der Antriebswelle 2 kann diese potentielle Energie dem System zurückgegeben werden, indem sich bei dieser Bewegung die Federeinrichtung 18 entspannt und die potentielle Energie in das System einspeist.

Es hat sich herausgestellt, dass bei einer erfindungsgemäßen Getriebeeinheit 1 Seilaufwickler mit einer Federeinrichtung mit nichtlinearer Federkennlinie von Vorteil sind, da dadurch erreicht werden kann, dass bei einer Drehbewegung des Seilaufwicklers in Abwickelrichtung mit zunehmendem Weg die aufzubringende Federkraft erhöht wird. In dem in Fig. 1 dargestellten Ausführungsbeispiel wird das nichtlineare Verhalten der Seilaufwickler 12 auf eine alternative Art und Weise erhalten, indem die Federeinrichtungen 18 als Schraubenfedern ausgebildet sind und eine lineare Federkennlinie aufweisen, wobei die Seilaufwickler 12 Aufwickelspulen 16 mit einer nichtlinearen Wegübersetzung aufweisen. In dem in Fig. 1 dargestellten Ausführungsbeispiel sind die Aufwickelspulen 16 als Schneckenspulen ausgebildet. Auf diese Weise wird ebenfalls erreicht, dass mit zunehmender Wegstrecke die gegen die Federeinrichtung 18 aufzubringende Kraft zunimmt.

Die Seilaufwickler 12 der ersten und der zweiten Seilzugeinrichtung 8,10 können dreh- und arretierbar an dem Abtrieb 4 befestigt sein, so dass diese in unterschiedlichen Drehstellungen arretiert werden können. Auf diese Weise ist es möglich, die Vorspannkraft der Federeinrichtungen 18 einzustellen und somit die erste und die zweite Seilzugeinrichtung 8,10 gegeneinander zu verspannen. Dadurch ist eine Steifigkeitsvariabilität des Systems gegeben. Das Verspannen der ersten und der zweiten Seilzugeinrichtung gegeneinander unterstützt das antagonistische Verhalten der erfindungsgemäßen Getriebeeinheit 1.

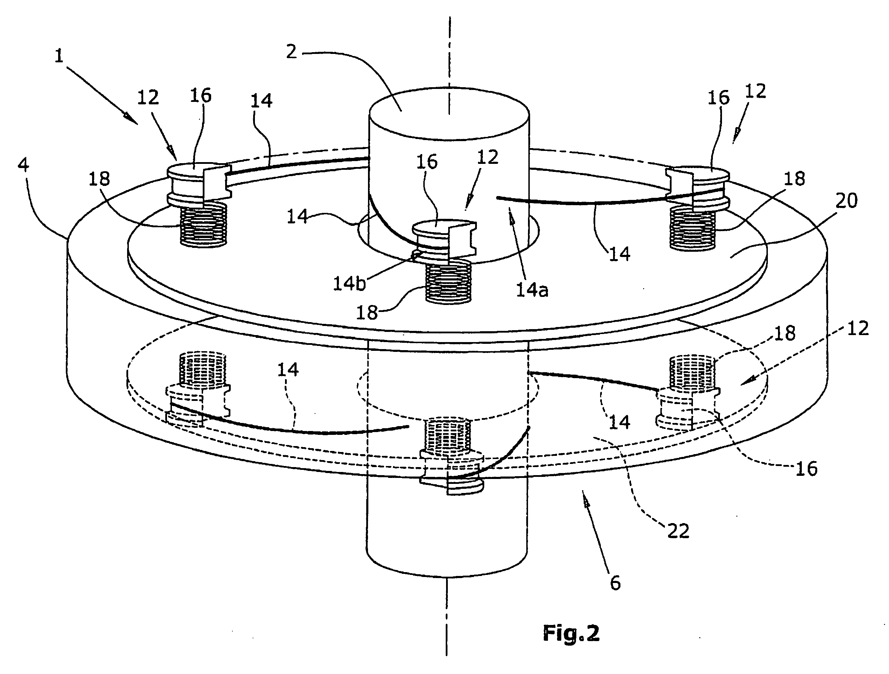

In Fig. 2 ist ein zweites Ausführungsbeispiel einer erfindungsgemäßen Getriebeeinheit 1 schematisch in der Seitenansicht dargestellt. Die Getriebeeinheit 1 weist eine Antriebswelle 2 und einen Abtrieb 4 auf. Der Abtrieb 4 ist als Hohlwelle ausgebildet, der die Antriebswelle 2 aufnimmt.

Zwischen der Antriebswelle 2 und dem Abtrieb 4 ist ein Seiltriebsystem 6 angeordnet, das eine Drehmomentübertragung von der Antriebswelle 2 auf den Abtrieb 4 ermöglicht. Das Seiltriebsystem 6 besteht aus mehreren ersten Seilzugeinrichtungen 8 und mehreren zweiten Seilzugeinrichtungen 10. Jede der ersten und zweiten Seilzugeinrichtungen 8,10 weist einen Seilaufwickler 12 auf, der an dem Abtrieb 4 angeordnet ist. Zugseile 14 verbinden die Antriebswelle 2 mit den Seilaufwicklern 12, indem sie mit einen ersten Ende 14a an der Antriebswelle 2 und mit einem zweiten Ende 14b an jeweils einem Seilaufwickler 12 befestigt sind. Jeder Seilaufwickler 12 besteht aus einer Aufwickelspule 16 und einer Federeinrichtung 18. Die Federeinrichtung 18 spannt die Aufwickelspule 16 jedes Seilaufwicklers 12 in Aufwickelrichtung vor.

Die Seilaufwickler 12 der ersten Seilzugeinrichtung 8 sind auf einer ersten Drehplatte 20 des Abtriebs 4 befestigt. Die Seilaufwickler 12 der zweiten Seilzugeinrichtung 10 sind auf einer zweiten Drehplatte 22, die parallel zu der ersten Drehplatte 20 angeordnet ist, befestigt. Die erste Drehplatte 20 und die zweite Drehplatte 22 sind drehbar und arretierbar an dem Antrieb 4 gelagert.

Die Seilaufwickler 12 der ersten Sellzugeinrichtung 8 sind gegenläufig zu dem Seilaufwickler 12 der zweiten Seilzugeinrichtung 10 angeordnet.

Die Funktionsweise der in Fig. 2 dargestellten Getriebeeinheit ist im Wesentlichen gleich der in Fig. 1 dargestellten erfindungsgemäßen Getriebeeinheit. Von der Antriebswelle 2 wird in Abhängigkeit von der Drehrichtung entweder über die erste Seilzugeinrichtung 8 oder die zweite Seilzugeinrichtung 10 ein Drehmoment an den Abtrieb 4 übertragen.

Ein Teil des Drehmomentes kann beispielsweise bei Überschreiten einer Drehmomentschwelle von den Federeinrichtungen 18 der entsprechenden Seilaufwickler aufgenommen werden.

Durch die gegenläufige Anordnung der Seilaufwickler 12 der ersten und der zweiten Seilzugeinrichtung können Drehmomente in unterschiedliche Richtungen von der Antriebswelle 2 auf den Abtrieb 4 übertragen werden.

In dem Fall, in dem ein Teil des Drehmomentes in den Federeinrichtungen 18 der ersten und der zweiten Seilzugeinrichtungen 8,10 aufgenommen wird und als potentielle Energie gespeichert wird, kann bei Wechsel der Drehrichtung der Antriebswelle 2 diese potentielle Energie in das System wieder eingespeist werden.

Die erste Drehplatte 20 und die zweite Drehplatte 22 können zueinander verdreht werden, so dass aufgrund des sich daraus entstehenden Verdrehwinkels die Seilaufwickler 12 der ersten und der zweiten Seilzugeinrichtung 8,10 eine unterschiedliche Vorspannung erhalten. Auf diese Weise kann durch Verdrehen der ersten und der zweiten Drehplatte 20,22 zueinander die Steifigkeit der erfindungsgemäßen Getriebeeinheit 1 verstellt werden. Um die erste und die zweite Drehplatte 20,22 in der entsprechenden verdrehten Position zu fixieren, werden diese über eine nicht dargestellte Arretiervorrichtung In ihrer Drehstellung arretiert.

Die Seilaufwickler 12 in dem in Fig. 2 dargestellten Ausführungsbeispiel weisen wiederum eine Federeinrichtung 18 mit linearer Federkennlinie auf. Um ein nichtlineares Federverhalten der Seilaufwickler 12 zu erhalten, sind daher die Aufwickelspulen 16 derart ausgestaltet, dass sie eine nichtlineare Wegübersetzung aufweisen. Dies erfolgt, indem die Aufwickelspulen 16 als Schneckenspulen ausgebildet sind.

Die erfindungsgemäßen Getriebeeinheiten 1 hat den Vorteil, dass sowohl die Umwelt als auch das System vor überhöhten Drehmomenten geschützt werden können, indem bei derartigen Drehmomenten diese von den Federeinrichtungen 18 aufgenommen werden.

Darüber hinaus erfolgt in diesem Fall eine Energiespeicherung in den Federelementen 18, die bei einer Umkehr der Bewegungsrichtung im System eingespeist werden können.

Mit den erfindungsgemäßen Getriebeeinheiten ist die Nachbildung eines antagonistischen Verhaltens in vorteilhafter Weise möglich. Erfindungsgemäße Getriebeeinheiten können beispielsweise in herkömmlichen Systemen zwischen dem eigentlichen Antrieb und dem eigentlichen Abtrieb zwischengeschaltet werden.

Extern eingeleitete Impulsbelastungen werden durch die erfindungsgemäße Getriebeeinheit "gefiltert". Dadurch kann der eigentliche Antrieb des Systems geschont werden, was zu höheren Standzeiten bei derartigen Systemen führt. Die erfindungsgemäßen Getriebeeinheiten können beispielsweise bei Robotern in der Manipulation oder aber auch bei Laufmaschinenantrieben eingesetzt werden.

## Patentansprüche

1. Getriebeeinheit (1) mit einer Antriebswelle (2) und mit einem Abtrieb (4), wobei der Abtrieb (4) koaxial zu der Antriebswelle (2) angeordnet ist, wobei
ein Seiltriebsystem (6) die Antriebswelle (2) mit dem Abtrieb (4) verbindet,
**dadurch gekennzeichnet, dass** das Seiltriebsystem (6) aus mindestens einer ersten Seilzugeinrichtung (8) und mindestens einer zweiten Seilzugeinrichtung (10) besteht, wobei die erste und zweite Seilzugeinrichtung (8, 10) jeweils aus einem Zugseil (14) und einem Seilaufwickler (12) bestehen,
wobei die Seilaufwickler (12) der ersten und der zweiten Seilzugeinrichtung (8, 10) an dem Abtrieb (4) angeordnet sind und jedes Zugseil (14) mit einem ersten Ende (14a) an der Antriebswelle (2) und mit einem zweiten Ende (14b) an einem der Seilaufwickler (12) befestigt ist,
wobei jeder Seilaufwickler (12) eine Federeinrichtung (18) aufweist, die den Seilaufwickler (12) in Aufwickelrichtung vorspannt und wobei der Seilaufwickler (12) der ersten Seilzugvorrichtung (8) gegenläufig zu dem Seilaufwickler (12) der zweiten Seilzugvorrichtung (10) angeordnet ist.

2. Getriebeeinheit nach Anspruch 1, **dadurch gekennzeichnet, dass** die Federeinrichtung (18) eine nichtlineare Federkennlinie aufweist.

3. Getriebeeinheit nach Anspruch 1, **dadurch gekennzeichnet, dass** die Federeinrichtung (18) eine lineare Federkennlinie aufweist und der Seilaufwickler (12) eine Aufwickelspule (16) mit nichtlinearer Wegübersetzung, vorzugsweise eine Schneckenspule, aufweist.

4. Getriebeeinheit nach einem der Ansprüche 1 bis 3, **dadurch gekennzeichnet, dass** mehrere erste und zweite Seiltriebsysteme (8, 10) die Antriebswelle (2) mit dem Abtrieb (4) verbinden.

5. Getriebeeinheit nach einem der Ansprüche 1 bis 4, **dadurch gekennzeichnet, dass** jeder Seilaufwickler (12) drehverstellbar an dem Abtrieb (4) gelagert ist, wobei der Seiltaufwickler (12) in einer Drehstellung arretierbar ist.

6. Getriebeeinheit nach einem der Ansprüche 1 bis 5, **dadurch gekennzeichnet, dass** der Abtrieb (4) als Hohlwelle ausgebildet ist, die die Antriebswelle (12) aufnimmt.

7. Getriebeeinheit nach einem der Ansprüche 4 bis 6, **dadurch gekennzeichnet, dass** der Abtrieb (4) eine erste Drehplatte (20) und eine parallel zu der ersten Drehplatte (20) angeordnete zweite Drehplatte (22) aufweist, wobei die erste Drehplatte (20) und die zweite Drehplatte (22) gegeneinander drehverstellbar und arretierbar sind und wobei die Seilaufwickler (12) der ersten Seiltriebsysteme (8) auf der ersten Drehplatte (20) angeordnet sind und die Seilaufwickler (12) der zweiten Seiltriebsysteme (10) auf der zweiten Drehplatte (22) angeordnet sind.

8. Getriebeeinheit nach einem der Ansprüche 4 bis 7, **gekennzeichnet durch** eine gleiche Anzahl von ersten und zweiten Seiltriebsystemen (8, 10).

## Claims

1. A gear unit (1) comprising a drive shaft (2) and an output side (4), said output side (4) being arranged coaxially to the drive shaft (2), wherein
a rope drive system (6) connects the drive shaft (2) to the output side (4),
**characterized in that**
the rope drive system (6) comprises at least one first rope pull device (8) and at least one second rope pull device (10), each of said first and second rope pull devices (8,10) comprising a pull rope (14) and a rope winding device (12),
the rope winding devices (12) of the first and second rope pull devices (8,10) being arranged at the output side (4), and each pull rope (14) having a first end (14a) connected to the drive shaft (2) and having a second end (14b) connected to the rope winding device (12),
wherein each rope winding device (12) comprises a spring device (18) for pre-tensioning the rope winding device (12) in the wind-up direction, and wherein the rope winding device (12) of the first rope pull device (8) is arranged in the opposite sense to the rope winding device (12) of the second rope pull device (10).

2. The gear unit according to claim 1, **characterized in that** the spring device (18) has a non-linear spring characteristic.

3. The gear unit according to claim 1, **characterized in that** the spring device (18) has a linear spring characteristic and the rope winding device (12) comprises a wind-up reel (16) with non-linear path translation, preferably a worm-type reel.

4. The gear unit according to any one of claims 1 to 3, **characterized in that** a plurality of first and second rope pull devices (8,10) connect the drive shaft (2) to the output side (4).

5. The gear unit according to any one of claims 1 to 4, **characterized in that** each rope winding device (12) is supported on the output side (4) in a manner allowing for rotary adjustment, the rope winding device (12) being lockable in a rotary position.

6. The gear unit according to any one of claims 1 to 5, **characterized in that** the output side (4) is formed as a hollow shaft accommodating the drive shaft (2).

7. The gear unit according to any one of claims 4 to 6, **characterized in that** the output side (4) comprises a first rotary plate (20) and a second rotary plate (22) arranged parallel to the first rotary plate (20), wherein said first rotary plate (20) and said second rotary plate (22) are rotatably adjustable and lockable relative to each other, and wherein the rope winding devices (12) of the first rope pull systems (8) are arranged on the first rotary plate (20) and the rope winding devices (12) of the second rope pull systems (10) are arranged on the second rotary plate (22).

8. The gear unit according to any one of claims 4 to 7, **characterized by** an identical number of first and second rope pull devices (8,10).

## Revendications

1. Accouplement (1) avec un arbre d'entraînement (2) et une sortie (4), la sortie (4) étant disposée de manière coaxiale par rapport à l'arbre d'entraînement (2), un système d'entraînement par câble (6) reliant l'arbre d'entraînement (2) à la sortie (4),
**caractérisé en ce que** le système d'entraînement par câble (6) comprend au moins un premier dispositif de traction de câble (8) et au moins un deuxième dispositif de traction de câble (10), les premier et deuxième dispositifs de traction de câble (8, 10) comprenant chacun un câble de traction (14) et un enrouleur de câble (12),
les enrouleurs de câble (12) des premier et deuxième dispositifs de traction de câble (8, 10) étant disposés à la sortie (4) et chaque câble de traction (14) étant fixé par une première extrémité (14a) à l'arbre d'entraînement (2) et par une seconde extrémité (14b) à un des enrouleurs de câble (12),
chaque enrouleur de câble (12) comprenant un dispositif à ressort (18) qui applique à l'enrouleur de câble (12) une précontrainte dans la direction d'enroulement et l'enrouleur de câble (12) du premier dispositif de traction de câble (8) étant disposé à contrecourant de l'enrouleur (12) du deuxième dispositif de traction de câble (10).

2. Accouplement selon la revendication 1, **caractérisé en ce que** le dispositif à ressort (18) présente une courbe caractéristique de ressort non linéaire.

3. Accouplement selon la revendication 1, **caractérisé en ce que** le dispositif à ressort (18) présente une courbe caractéristique de ressort linéaire et **en ce que** l'enrouleur de câble (12) comprend une bobine d'enroulement (16) avec transmission non linéaire, de préférence une bobine hélicoïdale.

4. Accouplement selon l'une des revendications 1 à 3, **caractérisé en ce que** plusieurs premiers et deuxièmes dispositifs de traction de câble (8, 10) relient l'arbre d'entraînement (2) à la sortie (4).

5. Accouplement selon l'une des revendications 1 à 4, **caractérisé en ce que** chaque enrouleur de câble (12) est monté à la sortie (4) de façon à pouvoir être réglé en rotation, l'enrouleur de câble (12) étant apte à être fixé en une position de rotation.

6. Accouplement selon l'une des revendications 1 à 5, **caractérisé en ce que** la sortie (4) est conçue comme arbre creux qui reçoit l'arbre d'entraînement (2).

7. Accouplement selon l'une des revendications 4 à 6, **caractérisé en ce que** la sortie (4) comprend une première plaque tournante (20) et une seconde plaque tournante (22) disposée parallèlement à la première plaque tournante (20), la première plaque tournante (20) et la seconde plaque tournante (22) étant réglable en rotation l'une à l'encontre de l'autre et étant aptes à être arrêtées, et les enrouleurs de câble (12) des premiers dispositifs de traction de câble (8) étant disposés sur la première plaque tournante (20) et les enrouleurs de câble (12) des deuxièmes dispositifs de traction de câble (10) étant disposés sur la seconde plaque tournante (22) .

8. Accouplement selon l'une des revendications 4 à 7, **caractérisé par** un même nombre de premiers et deuxièmes dispositifs de traction de câble (8, 10).
